# EUROPEAN PATENT SPECIFICATION

(11) **EP 3 988 804 B1**
(45) Date of publication and mention of the grant of the patent: **04.09.2024**
(21) Application number: 21182202.8
(22) Date of filing: 28.06.2021
(51) Int. Cl.: F16B 25/00

(54) **SCREW**
SCHRAUBE
VIS

(30) Priority: 20.10.2020 EP 20202834
(43) Date of publication of application: 27.04.2022
(73) Proprietor: Illinois Tool Works Inc., Glenview IL 60025 (US)
(72) Inventor: COUVREUR, Jérome, GLENVIEW, 60025 (US); LEJAULT, David, GLENVIEW, 60025 (US)
(74) Representative: HGF

(56) References cited:
- DE-U1- 202012 101 482
- US-A1- 2016 003 284

## Description

### Technical field of the invention

The present invention relates to screw. In particular, but not exclusively, the present invention relates to a self-tapping screw for insertion into concrete.

### Background of the invention

A self-tapping screw is a fastening component which is screwed into a pre-drilled hole in a solid material. The hole is drilled with a predetermined diameter, and the screw is configured to form a tapping in the peripheral wall of the hole as it is being screwed in.

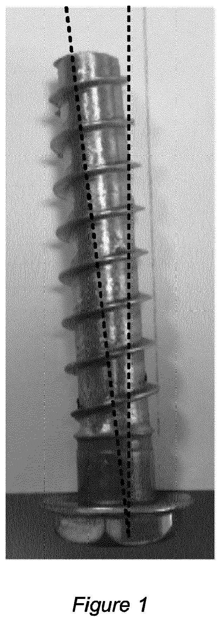

The formation of the threads on a self-tapping screw is traditionally done using a rolling process. That is the threads are formed by pressing a shaped tool against a blank (non-threaded rod), and pushing the threaded shape into the blank. The rolling process generates a high concentration of stresses on the screw body. So, sometimes unfavourable bending of the screw can occur (shown in figure 1). This bending makes installation more difficult and less efficient.

US 2016/003284 A1 discloses a concrete screw.

It is therefore an object of the present invention to mitigate the above problems. In particular, it is an object of the present invention to provide screw which can be easily formed during the rolling process with less bending than previous screws. Therefore allowing for reduced installation effort and increased performance of the screw. It is also an objective of the present invention to provide the advantage that a screw with an improved stress distribution may be provided.

### Summary of the invention

The invention is set out in the set of appended claims.

According to a first aspect of the present invention there is provided a screw comprising:
a longitudinal body having a first end and a second end;
a head portion for receiving a driving force, the head portion adjacent the first end of the body;
wherein the longitudinal body comprises:
   a primary thread helically extending between the first end and the second end; and
   an auxiliary thread separated from the primary thread, and helically extending from the first end at least partially towards the second end.

Suitably the auxiliary thread extends between 5 and 25 percent of a length of the longitudinal body.

Suitably the auxiliary thread extends between 5 and 15 percent of a length of the longitudinal body.

Suitably the primary thread and auxiliary thread extend parallel to one another around the longitudinal body, such that the auxiliary thread is disposed on an interpitch of the primary thread.

Suitably at least one of the primary thread and/or auxiliary thread are asymmetrical threads.

Suitably, said asymmetrical thread has a first flank which has a planar surface and a second flank which has a concave surface.

Suitably the auxiliary thread comprises excess material from the formation of the primary thread.

Suitably, the auxiliary thread comprises excess material from the rolling of the primary thread.

Suitably, the screw is formed of a metallic material.

Suitably, the auxiliary thread has a crest height that is equal to or less than a crest height of the primary thread.

The crest height of the auxiliary thread is less than the crest height of the primary thread.

According to the invention, the crest height of the auxiliary thread is less than 50% of the crest height of the primary thread.

Suitably, the crest height of the auxiliary thread is less than 25% of the crest height of the primary thread.

Suitably at least one of the primary and/or auxiliary threads has a uniform profile.

In examples, the head portion may comprise a Torx (Registered Trademark) head. In particular, the Torx head may comprise an internal Torx socket and/or an external Torx profile. In some examples, the Torx head comprises both an internal Torx socket and an external Torx profile.

Certain embodiments of the invention provide the advantage that a screw with an improved stress distribution may be provided.

Certain embodiments of the present invention provide a screw which can be easily formed during the rolling process with less bending than previous screws. Therefore allowing for reduced installation effort and increased performance of the screw.

### Brief description of the drawings

Embodiments of the invention are further described hereinafter with reference to the accompanying drawings, in which:
Figure 1 illustrates an example of a screw with a single thread;
Figure 2a illustrates an example of the screw according to the present invention;
Figure 2b illustrates an enlarged view of a portion of the screw according to the present invention.
Figure 3a illustrates a front view of a screw;
Figure 3b illustrates a rear view of the screw of Figure 3a;
Figure 3c illustrates an enlarged view of portion A of Figure 3a;
Figure 3d illustrates a top view of the screw of Figure 3a;
Figure 3e illustrates a bottom view of the screw of Figure 3a;
Figure 3f illustrates a perspective view of the screw of Figure 3a;
Figure 4a illustrates a perspective view of a screw having a Torx head;
Figure 4b illustrates an end view of the screw of Figure 4a; and
Figure 4c illustrates an alternative perspective view of the screw of Figures 4a and 4b.

In the drawings like reference numerals refer to like parts.

### Detailed Description

The present intention refers to a screw with a primary thread and an additional auxiliary thread. While the present invention refers to a screw the auxiliary thread concept may be applied to any type of screw an in particular screws formed by a rolling process.

The screw disclosed herein may be a self-tapping concrete screw for insertion into a hole formed in concrete.

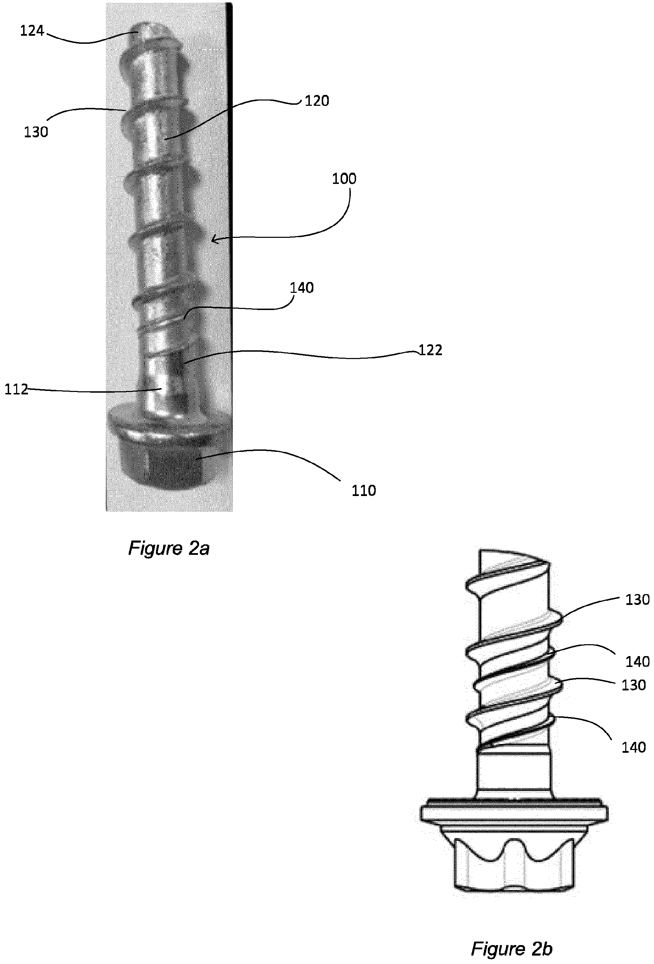

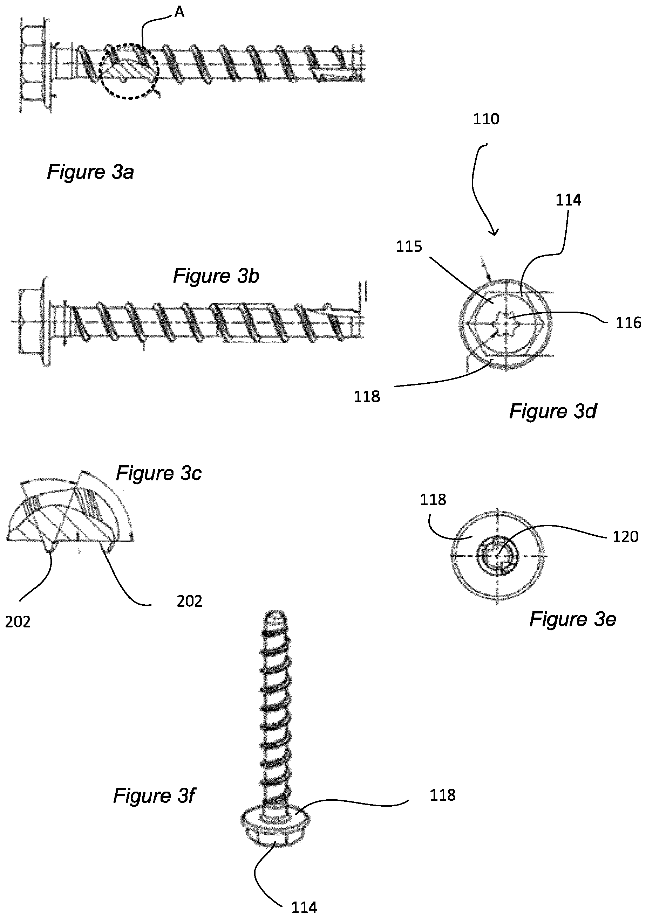

Referring now to Figure 2a and 2b an example of a screw 100 is illustrated. The screw 100 includes a head portion 110 and a longitudinal body 120. The longitudinal body 120 is attached to the head portion 110 at a first end 122. A second end 124 of the longitudinal body 120 is configured to be the first part of a screw 100 to enter a material in use. The head portion is described below with reference to Figures 3a to 3f. The longitudinal body 120 has a central axis between the first end 122 and the second end 124.

The longitudinal body 120 has a primary thread 130 which helically extends between the first end 122 and the second end 124 of the longitudinal body 120. In this example the primary thread 130 is a symmetrical thread. A symmetrical thread is a thread which has a flank angle (the angle between a flank and the central axis of the longitudinal body 120) that is substantially identical on both sides of a crest 202 (see figure 3c, furthest point from the central axis) of the thread. In other examples the primary thread 130 may be an asymmetrical thread. It may also be that the auxiliary thread is an asymmetrical thread. According to another example, the primary thread is a symmetrical thread while the auxiliary thread is an asymmetrical thread. An asymmetrical thread is where the flank angle is different on each side of a crest 202 of the thread. For example, said asymmetrical thread has a first flank which has a planar surface and a second flank which has a concave surface. For instance, a first flank may be planar and may form a flank angle of between 0 and 10 degrees and a second flank may have a concave surface.

The primary thread 130 may extend substantially the entire length of the longitudinal body 120. That is the primary thread may helically wind around the longitudinal body 120 from the first end 122 to the second end 124. In some cases there may be a link portion 112 between the first end 122 and the head portion 110 where the link portion 112 is not threaded.

The longitudinal body 120 further includes and auxiliary thread 140. The auxiliary thread 140 is a separate thread to the primary thread 130. In other words, the primary thread 130 does not contact the auxiliary thread 140. The auxiliary thread 140 helically extends from the first end 122 of the longitudinal body 120 towards the second end 124. In this example, the auxiliary thread 140 extends only partially along the length of the longitudinal body 120. For example the auxiliary thread may only extend along 5 to 25 percent of the length of the longitudinal body 120 and aptly the auxiliary thread extends from the first end. According to another example, the auxiliary thread may only extend along 5 to 15 percent of the length of the longitudinal body 120 and aptly the auxiliary thread extends from the first end. The auxiliary thread 140 comprises excess material from the formation of the primary thread. For instance, auxiliary thread 140 is formed from excess material from the rolling of the primary thread 130 (which is caused by the rolling of the primary thread 130). In this example, the screw 100 is formed of a metallic material i.e. stainless steel.

The auxiliary thread 140 may helically wind in the same direction as the primary thread 130. In this way the primary thread 130 and auxiliary thread 140 may extend parallel to one another. For example the auxiliary thread 140 may be positioned between two crests 202 of the primary thread 130 such that the auxiliary thread 140 is positioned in the interpitch of the primary thread 130.

The auxiliary thread 140 may be a symmetrical or an asymmetrical thread. Moreover any combination of symmetrical and asymmetrical primary and/or auxiliary threads may be used. One of both of the primary and auxiliary threads 130 140 may be uniform along the length of the winding. That is the thread may have a substantially constant cross-section.

In this example, the crest 202 of the primary thread 130 is further from the central axis of the longitudinal body 120 than the crest 202 of the auxiliary thread 140 is from the central axis. In other words the primary thread 130 may be larger than the auxiliary thread 140.

The auxiliary thread 140 provides additional strengthening to the longitudinal body 120 of the screw 100, which can reduce unwanted bending. Further, the use of additional material from the rolling process provides an cost effective method of strengthening the screw 100.

Figures 3a to 3f illustrate an example of a screw 100 to which the present invention can be applied. These figures are used for the description of the head portion 110 of the screw 100 shown in Figures 2a and 2b.

The head portion 110 may be configured to receive a tool in use. In this way the head portion 110 is configured to receive an external force so that the screw 100 can be inserted into a material, like concrete for example. The head portion 110 may have a diameter which is larger than the diameter of the longitudinal body 120.

In this example the head portion 110 includes a protrusion 114. The protrusion 114 may be a hexagonal shaped protrusion. In other words the protrusion 114 has a substantially planar top surface 115, which is perpendicular to the central axis of the longitudinal body 120, the top surface 115 being hexagonal shaped. Other examples of the head portion 110 may include other shaped protrusions.

In this example the head portion 110 includes a cavity 116 for engaging with a tool. The cavity 116 may be substantially central on the protrusion 114. The cavity 116 extending from the top surface 115 in a direction parallel to the central axis of the longitudinal body 120. The cavity 116 may engage a tool in use. In this example, the cavity 116 is a Torx head cavity (cavity with six pointed star cavity). In other examples the cavity 116 may be a hexagonal cavity, or other cavity for receiving a tool.

The head portion 110 may also include a flange portion 118. The flange portion 118 may be adjacent to the longitudinal body 120 and the protrusion 114 such that it is sandwiched between them. The flange portion 118 extends radially around the head portion 110 so as to form a lip around the periphery of the head portion 110. This means the lip is configured to sit against the material into which the longitudinal body 120 has been inserted during use.

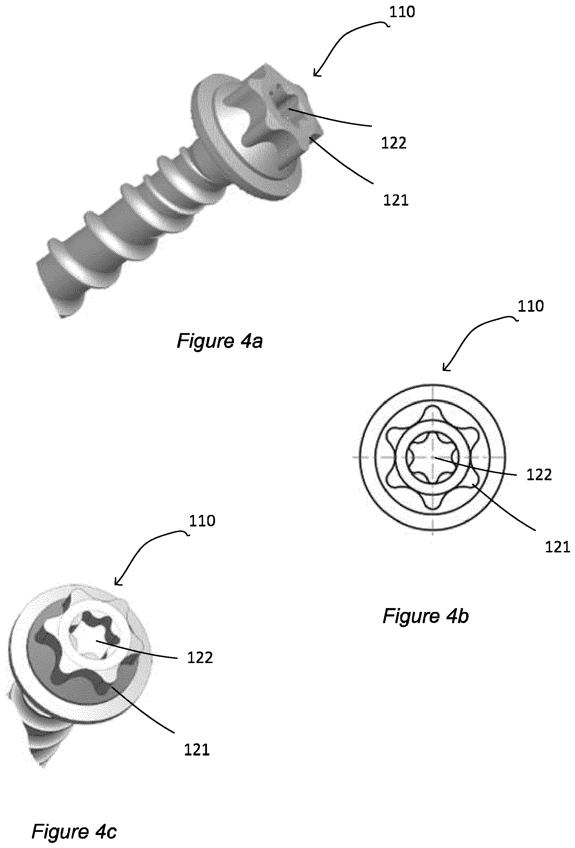

In the example of Figures 4a to 4c the head portion 110 comprises a Torx head 110. In particular, the Torx head 110 has an external Torx profile having a six pointed star shaped protrusion 121. Optionally, the Torx head further may comprise an internal Torx socket 122. In another example, the Torx head 110 includes an internal Torx socket 122 and not a Torx protrusion 121. Instead, the protrusion may be hexagonal, for example. The increased surface contact provided by the Torx head protrusion 121 or Torx socket 122 reduces screwing effort and facilitates torque transmission. Providing an internal Torx socket 122 is also advantageous for access during use of the screw. In particular, where the screw is used in a position having restricted access the provision of an internal Torx socket 122 makes it easier for the installer to access the head 110 with the tool to rotate the screw.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A screw (100) comprising:
a longitudinal body (120) having a first end (122) and a second end (124);
a head portion (110) for receiving a driving force, the head portion adjacent the first end of the body;
wherein the longitudinal body (120) comprises:
a primary thread (130) helically extending between the first end (122) and the second end (124); and
an auxiliary thread (140) separated from the primary thread, and helically extending from the first end at least partially towards the second end, wherein the crest height of the auxiliary thread (140) is less than 50% of the crest height of the primary thread (130).

2. A screw as claimed in claim 1, wherein the auxiliary thread (140) extends between 5 and 25 percent of a length of the longitudinal body (120).

3. A screw as claimed in claim 2, wherein the auxiliary thread (140) extends between 5 and 15 percent of a length of the longitudinal body (120).

4. A screw as claimed in any of the preceding claims, wherein the primary thread (130) and auxiliary thread extend (140) parallel to one another around the longitudinal body (120), such that the auxiliary thread is disposed on an interpitch of the primary thread (130).

5. A screw as claimed in any preceding claim, wherein at least one of the primary thread (130) and/or auxiliary thread (140) are asymmetrical threads.

6. A screw as claimed in claim 5, wherein said asymmetrical thread has a first flank which has a planar surface and a second flank which has a concave surface.

7. A screw as claimed in any preceding claim, wherein the auxiliary thread (140) comprises excess material from the formation of the primary thread (130).

8. A screw as claimed in claim 7, wherein the auxiliary thread (140) comprises excess material from the rolling of the primary thread (130).

9. A screw as claimed in any preceding claim, wherein at least one of the primary (130) and/or auxiliary threads (140) has a uniform profile.

10. A screw as claimed in claim 1, wherein the crest height of the auxiliary thread (140) is less than 25% of the crest height of the primary thread (130).

11. A screw as claimed in any preceding claim, wherein the head portion (110) comprises a Torx head.

12. A screw as claimed in any preceding claim, wherein the screw (100) is formed of a metallic material.

## Patentansprüche

1. Schraube (100), aufweisend:
einen Längskörper (120) mit einem ersten Ende (122) und einem zweiten Ende (124);
einen Kopfabschnitt (110) zum Aufnehmen einer Antriebskraft, wobei der Kopfabschnitt an das erste Ende des Körpers angrenzt;
wobei der Längskörper (120) aufweist:
ein Primärgewinde (130), das sich schraubenförmig zwischen dem ersten Ende (122) und dem zweiten Ende (124) erstreckt; und
ein Nebengewinde (140), das von dem Primärgewinde getrennt ist und sich schraubenförmig von dem ersten Ende zumindest teilweise in Richtung des zweiten Endes erstreckt, wobei die Scheitelhöhe des Nebengewindes (140) weniger als 50 % der Scheitelhöhe des Primärgewindes (130) beträgt.

2. Schraube nach Anspruch 1, wobei sich das Nebengewinde (140) um zwischen 5 und 25 Prozent einer Länge des Längskörpers (120) erstreckt.

3. Schraube nach Anspruch 2, wobei sich das Nebengewinde (140) um zwischen 5 und 15 Prozent einer Länge des Längskörpers (120) erstreckt.

4. Schraube nach einem der vorhergehenden Ansprüche, wobei sich das Primärgewinde (130) und das Nebengewinde (140) parallel zueinander um den Längskörper (120) erstrecken, sodass das Nebengewinde auf einer Zwischensteigung des Primärgewindes (130) angeordnet ist.

5. Schraube nach einem der vorhergehenden Ansprüche, wobei zumindest eines des Primärgewindes (130) und/oder des Nebengewindes (140) asymmetrische Gewinde sind.

6. Schraube nach Anspruch 5, wobei das asymmetrische Gewinde eine erste Flanke, die eine ebene Oberfläche hat, und eine zweite Flanke, die eine konkave Oberfläche hat, aufweist.

7. Schraube nach einem der vorhergehenden Ansprüche, wobei das Nebengewinde (140) überschüssiges Material von der Bildung des Primärgewindes (130) aufweist.

8. Schraube nach Anspruch 7, wobei das Nebengewinde (140) überschüssiges Material von dem Walzen des Primärgewindes (130) aufweist.

9. Schraube nach einem der vorhergehenden Ansprüche, wobei zumindest eines von dem Primärgewinde (130) und/oder dem Nebengewinde (140) ein gleichförmiges Profil hat.

10. Schraube nach Anspruch 1, wobei die Scheitelhöhe des Nebengewindes (140) weniger als 25 % der Scheitelhöhe des Primärgewindes (130) beträgt.

11. Schraube nach einem der vorhergehenden Ansprüche, wobei der Kopfabschnitt (110) einen Torx-Kopf aufweist.

12. Schraube nach einem der vorhergehenden Ansprüche, wobei die Schraube (100) aus einem metallischen Material gebildet ist.

## Revendications

1. Vis (100) comprenant :
un corps longitudinal (120) ayant une première extrémité (122) et une seconde extrémité (124) ;
une partie de tête (110) destinée à recevoir une force d'entraînement, la partie de tête étant adjacente à la première extrémité du corps ;
dans lequel le corps longitudinal (120) comprend :
un filetage principal (130) s'étendant de manière hélicoïdale entre la première extrémité (122) et la seconde extrémité (124) ; et
un filetage auxiliaire (140) séparé du filetage principal, et s'étendant de manière hélicoïdale depuis la première extrémité au moins partiellement vers la seconde extrémité, dans lequel la hauteur de crête du filetage auxiliaire (140) est inférieure à 50 % de la hauteur de crête du filetage principal (130).

2. Vis selon la revendication 1, dans laquelle le filetage auxiliaire (140) s'étend entre 5 et 25 pour cent d'une longueur du corps longitudinal (120).

3. Vis selon la revendication 2, dans laquelle le filetage auxiliaire (140) s'étend entre 5 et 15 pour cent d'une longueur du corps longitudinal (120).

4. Vis selon l'une quelconque des revendications précédentes, dans laquelle le filetage principal (130) et le filetage auxiliaire (140) s'étendent parallèlement l'un à l'autre autour du corps longitudinal (120), de sorte que le filetage auxiliaire est disposé sur un pas intermédiaire du filetage principal (130).

5. Vis selon l'une quelconque des revendications précédentes, dans laquelle au moins un du filetage principal (130) et/ou du filetage auxiliaire (140) est un filetage asymétrique.

6. Vis selon la revendication 5, dans laquelle ledit filetage asymétrique a un premier flanc qui a une surface plane et un second flanc qui a une surface concave.

7. Vis selon l'une quelconque des revendications précédentes, dans laquelle le filetage auxiliaire (140) comprend un excès de matière provenant de la formation du filetage principal (130).

8. Vis selon la revendication 7, dans laquelle le filetage auxiliaire (140) comprend un excès de matière provenant de l'enroulement du filetage principal (130).

9. Vis selon l'une quelconque des revendications précédentes, dans laquelle au moins un des filets principal (130) et/ou auxiliaire (140) a un profil uniforme.

10. Vis selon la revendication 1, dans laquelle la hauteur de crête du filetage auxiliaire (140) est inférieure à 25 % de la hauteur de crête du filetage principal (130).

11. Vis selon l'une quelconque des revendications précédentes, dans laquelle la partie de tête (110) comprend une tête Torx.

12. Vis selon l'une quelconque des revendications précédentes, dans laquelle la vis (100) est formée d'un matériau métallique.
